# EUROPEAN PATENT SPECIFICATION

(11) **EP 3 992 801 B1**
(45) Date of publication and mention of the grant of the patent: **28.10.2026**
(21) Application number: 20836504.9
(22) Date of filing: 12.06.2020
(51) Int. Cl.: G06F 12/02, G06F 3/06

(54) **DATA STORAGE METHOD FOR FLASH MEMORY DEVICE AND FLASH MEMORY DEVICE**
DATENSPEICHERVERFAHREN FÜR FLASH-SPEICHERVORRICHTUNG UND FLASH-SPEICHERVORRICHTUNG
PROCÉDÉ DE STOCKAGE DE DONNÉES POUR DISPOSITIF DE MÉMOIRE FLASH ET DISPOSITIF DE MÉMOIRE FLASH

(30) Priority: 10.07.2019 CN 201910621770
(43) Date of publication of application: 04.05.2022
(73) Proprietor: Huawei Technologies Co., Ltd., Longgang District Shenzhen, Guangdong 518129 (CN)
(72) Inventor: ZHOU, Jianhua, Shenzhen, Guangdong 518129 (CN)
(74) Representative: Epping - Hermann - Fischer
(86) International application number: PCT/CN2020/095985
(87) International publication number: WO 2021/004231

(56) References cited:
- CN-A- 102 521 144
- CN-A- 102 591 589
- CN-A- 103 440 206
- CN-A- 104 102 591
- CN-A- 105 760 776
- CN-A- 110 471 861
- US-A1- 2006 179 212
- US-A1- 2017 235 488
- US-B1- 10 222 984
- YONG-GOO LEE ET AL: "[mu]-FTL:", PROCEEDINGS OF THE 8TH ACM INTERNATIONAL CONFERENCE ON EMBEDDED SOFTWARE (EMSOFT '08). ATLANTA, GA, USA OCTOBER 19-24, 2008, ACM, 2 PENN PLAZA, SUITE 701 NEW YORK NY 10121-0701 USA, 19 October 2008 (2008-10-19), pages 21 - 30, XP058222788, ISBN: 978-1-60558-468-3, DOI: 10.1145/1450058.1450063
- DAWOON JUNG ET AL: "Superblock FTL", ACM TRANSACTIONS ON EMBEDDED COMPUTING SYSTEMS, ACM, NEW YORK, NY, US, vol. 9, no. 4, 6 April 2010 (2010-04-06), pages 1 - 41, XP058214518, ISSN: 1539-9087, DOI: 10.1145/1721695.1721706
- CHIN-HSIEN WU ET AL: "An adaptive two-level management for the flash translation layer in embedded systems", COMPUTER-AIDED DESIGN; [IEEE/ACM INTERNATIONAL CONFERENCE ON COMPUTER-AIDED DESIGN], IEEE PRESS, 445 HOES LANE PO BOX 1331 PISCATAWAY, NJ 08855-1331 USA, 5 November 2006 (2006-11-05), pages 601 - 606, XP058136795, ISSN: 1092-3152, ISBN: 978-0-7803-7607-6, DOI: 10.1145/1233501.1233624
- DONGCHUL PARK ET AL: "A Workload-Aware Adaptive Hybrid Flash Translation Layer with an Efficient Caching Strategy", 2011 IEEE 19TH ANNUAL INTERNATIONAL SYMPOSIUM ON MODELING, ANALYSIS AND SIMULATION OF COMPUTER AND TELECOMMUNICATION SYSTEMS (MASCOTS 2011) : SINGAPORE, 25 - 27 JULY 2011, IEEE, PISCATAWAY, NJ, 25 July 2011 (2011-07-25), pages 248 - 255, XP032048413, ISBN: 978-1-4577-0468-0, DOI: 10.1109/MASCOTS.2011.29
- WANG, JUNJIE: "Study on FTL (Flash Translation Layer) Algorithm", WANFANG DISSERTATIONS, 29 November 2013 (2013-11-29), pages 1 - 72, XP009525506

## Description

### TECHNICAL FIELD

Embodiments of this application relate to the field of data storage technologies, and in particular, to a data storage method in a flash device and a flash device.

### BACKGROUND

Because a flash device has a special data read/write characteristic, an operating system cannot directly manage the flash device. A flash translation layer (flash translation layer, FTL) is disposed between the operating system and the flash device. When a user accesses data in the flash device, after receiving an access request, the operating system first queries the FTL to determine a storage location of the data, then obtains the data from a corresponding storage location, and finally responds to the access request of the user. To ensure a response speed of the flash device, a current FTL is mainly stored in memory space.

Usually, an FTL with a comparatively fine granularity is used. A 512-byte mapping granularity is used as an example. To be specific, each FTL mapping unit corresponds to a 512-byte logical address. When writing new data, the user may directly search for new physical space for storage, and modify a corresponding FTL mapping unit to map, to a new physical address, a logical address corresponding to the FTL mapping unit.

The FTL with a comparatively fine granularity is used. Because the granularity is comparatively small, a mapping ratio between the flash device and a memory is comparatively small. The 512-byte mapping granularity is used as an example. A corresponding mapping ratio is 125. To be specific, a 1-GB memory can be mapped to only a 125-GB flash device. Therefore, the FTL with a comparatively fine granularity corresponds to comparatively large memory overheads, and it is difficult to meet a memory requirement of a large-capacity flash device. With rapid development of the large-capacity flash device, a memory capacity will limit development of the large-capacity flash device.

Document YONG-GOO LEE ET AL: "µ-FTL: A Memory-Efficient Flash Translation Layer Supporting Multiple Mapping Granularities", ISBN: 978-1-60558-468-3 proposes a µ-FTL that dynamically adjusts mapping granularities according to the size of write requests by maintaining mapping information in an extent-based µ-Tree structure. Only a small and fixed-sized RAM is used as a cache for mapping entries and per-page validity information. µ-FTL divides the whole logical address space into a set of non-overlapping physical blocks depending on the partitions they belong to.

US 10 222 984 B1 presents a technique for use in managing multi-granularity FTL in solid state drives (SSD). An SSD comprises a FTL table, which is reconfigured into a plurality of multiple sub-tables, where a first sub-table has a first logical page size and a second sub-table has a second logical page size, the first logical page size being smaller than the second logical page size.

Document DAWOON JUNG ET AL: "Superblock FTL: A Superblock-Based Flash Translation Layer with a Hybrid Address Translation Scheme", ISSN: 1539-9087 proposes a FTL called SuperblockFTL, which employs a hybrid address translation scheme for NAND flash memory. The proposed scheme defines a superblock as a set of adjacent logical blocks. Superblocks are mapped at coarse granularity, while pages inside a superblock are mapped freely at fine granularity to any location in a number of physical blocks allocated to the superblock.

US 2017/235488 A1 proposes a window based mapping. Two separate mapping tables for translation of logical addresses to physical address (L2P), e.g., a L2P front map and a L2P back map, are used where the L2P front map acts as a window to the L2P back map. The L2P front map has smaller granularity for data access than the L2P back map.

US 2006/179212 A1 presents an apparatus for controlling a flash memory including a plurality of FTLs and a control block. When an access is requested from outside, the control block determines a pattern of the access, selects one of the FTLs based on the determination result, and manages mapping data of the flash memory based on the selected FTL.

Document CHIN-HSIEN WU ET AL: "An adaptive two-level management for the flash translation layer in embedded systems", ISBN: 978-0-7803-7607-6 explores an address translation mechanism that can dynamically and adaptively switch between two granularities in the mapping of logical block addresses into physical block addresses in flash memory management.

Document DONGCHUL PARK ET AL: "A Workload-Aware Adaptive Hybrid Flash Translation Layer with an Efficient Caching Strategy", ISBN: 978-1-4577-0468-0 proposes a Convertible Flash Translation Layer (CFTL) for NAND flash-based storage systems. CFTL is a hybrid flash translation layer adaptive to workloads so that it can dynamically switch its mapping scheme to either a page level mapping or a block level mapping scheme.

CN 102 591 589 A presents a hybrid mapping scheme for address mapping for data storage devices. The address mapping method determines whether the write data includes the super sequential block (SSB), and selects the address mapping mode for the write data depending on the existence of SSB.

CN 102 521 144 A presents a flash FTL system, which includes address translation module and write operation module. The flash FTL system balances between the frequency of baggage collection and the amount of data copies during the baggage collection.

### SUMMARY

The invention is set out in the appended set of claims. To resolve the foregoing technical problem, embodiments of this application provide a data storage method in a flash device and a flash device, which may provide a plurality of types of FTLs with different granularities, and flexibly configure a granularity of a logical address, to reduce memory overheads and maximize capacity space of a flash device that may be supported by a memory.

According to a first aspect, an embodiment of this application provides a data storage method in a flash device. The flash device includes a plurality of types of flash translation layers FTLs, each of the plurality of types of FTLs is used to record a mapping from a logical address to a flash physical address, and granularities of logical addresses of the plurality of types of FTLs are different. The data storage method includes: first, receiving a write operation request; then, selecting a target FTL from the plurality of types of FTLs based on the received write operation request; and finally, allocating a physical address from the flash device to the received write operation request based on the selected target FTL. The selecting a target FTL from the plurality of types of FTLs based on the received write operation request includes: selecting the target FTL from the plurality of types of FTLs based on a service type for sending the write operation request, wherein the service type is indicated by the write operation request and comprises one of a video recording service, a log online service, and an online transaction service.

It can be learned from the technical solution of the first aspect that the technical solution has the following advantages. The flash device includes the plurality of types of flash translation layers FTLs, each of the plurality of types of FTLs is used to record the mapping from a logical address to a flash physical address, and the granularities of the logical addresses of the plurality of types of FTLs are different. In addition, the target FTL is selected from the plurality of types of FTLs based on the received write operation request, and the physical address is allocated from the flash device to the received write operation request based on the selected target FTL. Therefore, a plurality of types of FTLs with different granularities may be provided, and a granularity of a logical address may be flexibly configured, to reduce memory overheads and maximize capacity space of a flash device that may be supported by a memory. A suitable target FTL may be more accurately selected for the write operation request, to implement proper allocation of a physical address of the flash device and maximize capacity space of the flash device.

In some possible implementations of the first aspect, the selecting a target FTL from the plurality of types of FTLs based on the received write operation request may further include: selecting the target FTL from the plurality of types of FTLs based also on at least one of an input/output I/O size of the write operation request, a data type carried in the write operation request, or modification frequency of data in a logical address corresponding to the write operation request. In this possible implementation, the input/output I/O size of the write operation request, the data type carried in the write operation request, or the modification frequency of the data in the logical address corresponding to the write operation request are also used as a basis for selecting the target FTL. A suitable target FTL may be more accurately selected for the write operation request, to implement proper allocation of a physical address of the flash device and maximize capacity space of the flash device.

In some possible implementations of the first aspect, if the target FTL is selected based on the I/O size of the write operation request, the following manner may be used: separately comparing the I/O size of the write operation request with write data size ranges corresponding to the granularities of the logical addresses of the plurality of types of FTLs, where the write data size ranges corresponding to the granularities of the logical addresses of the FTLs are different; and using, as the target FTL, an FTL corresponding to a write data size range that the I/O size of the write operation request meets. It should be understood that a write data size range may be set based on a granularity of a logical address of an FTL, and the granularity is a storage space size. In this possible implementation, the write data size ranges corresponding to the granularities of the logical addresses of the plurality of types of FTLs are set, and the target FTL is selected based on the set write data size ranges, to implement an implementation in which the target FTL is selected based on the I/O size of the write operation request. In this implementation, rationality and accuracy of the target FTL may be improved.

In some possible implementations of the first aspect, the allocating a physical address from the flash device to the write operation request based on the target FTL may include: allocating the physical address from the flash device to the write operation request based on a granularity of the flash physical address mapped by the target FTL. The granularity of the flash physical address mapped by the target FTL may be a fine granularity, for example, a 512-byte or 1-KB mapping granularity, or may be a coarse granularity, for example, a 4-KB or 8-KB mapping granularity. An FTL mapping granularity may be an integer multiple of a sector size (a typical value is 512 bytes). In this possible implementation, the physical address is allocated from the flash device based on FTLs with different granularities, so that storage space in the flash device is properly allocated by using the FTLs with different granularities.

In some possible implementations of the first aspect, the data storage method may further include: after the physical address is allocated to the write operation request, recording, in the target FTL, a mapping relationship between the logical address of the write operation request and the physical address allocated from the flash device. The logical address may be a logical block address (logical block address, LBA), and the physical address may be a physical page address (physical page address, PPA). In this possible implementation, the mapping relationship between the logical address of the write operation request and the physical address allocated from the flash device is recorded in the target FTL, so that when an access request for accessing the logical address is received next time, a corresponding physical address may be quickly queried, to implement a quick response to the access request.

According to a second aspect, an embodiment of this application provides a flash device. The flash device includes a plurality of types of flash translation layers FTLs, each of the plurality of types of FTLs is used to record a mapping from a logical address to a flash physical address, and granularities of logical addresses of the plurality of types of FTLs are different. The flash device includes: a receiving module, configured to receive a write operation request; a selection module, configured to select a target FTL from the plurality of types of FTLs based on the write operation request; and a management module, configured to allocate a physical address from the flash device to the write operation request based on the target FTL. The selection module is further configured to: select the target FTL from the plurality of types of FTLs based on a service type for sending the write operation request, wherein the service type comprises one of a video recording service, a log online service, and an online transaction service.

In the second aspect of this application, a composition module of the flash device may further perform the steps described in the possible implementations of the first aspect. For details, refer to the descriptions in the first aspect and the possible implementations. Details are not described herein again.

According to a third aspect, an embodiment of this application provides a flash device. The flash device includes a plurality of types of flash translation layers FTLs, each of the plurality of types of FTLs is used to record a mapping from a logical address to a flash physical address, and granularities of logical addresses of the plurality of types of FTLs are different. The flash device includes a processor and a storage medium, and the processor communicates with the storage medium. The storage medium is configured to store an operation instruction, and the processor is configured to invoke the operation instruction to perform the method according to the first aspect or any one of the implementations of the first aspect.

### BRIEF DESCRIPTION OF DRAWINGS

FIG. 1 is a schematic diagram of an embodiment of a data storage method in a flash device according to an embodiment of this application;
FIG. 2 is a schematic structural diagram of composition of a flash device according to an embodiment of this application; and
FIG. 3 is a schematic structural diagram of composition of a flash device according to an embodiment of this application.

### DESCRIPTION OF EMBODIMENTS

Embodiments of this application provide a data storage method in a flash device and a flash device, which may provide a plurality of types of FTLs with different granularities, and flexibly configure a granularity of a logical address, to reduce memory overheads and maximize capacity space of a flash device that may be supported by a memory.

The following describes the embodiments of this application with reference to accompanying drawings.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in the embodiments of this application. In addition, the terms "include", "contain" and any other variants mean to cover the non-exclusive inclusion, so that a process, method, system, product, or device that includes a series of units is not necessarily limited to those units, but may include another unit not expressly listed or inherent to such a process, method, system, product, or device.

A data storage method in a flash device in this embodiment of this application is applicable to a flash device, for example, an NAND flash chip or a solid-state drive (solid-state drive, SSD) that uses the NAND flash chip as a storage medium.

To facilitate understanding of the data storage method in the embodiments of this application, the following provides detailed descriptions with reference to specific embodiments.

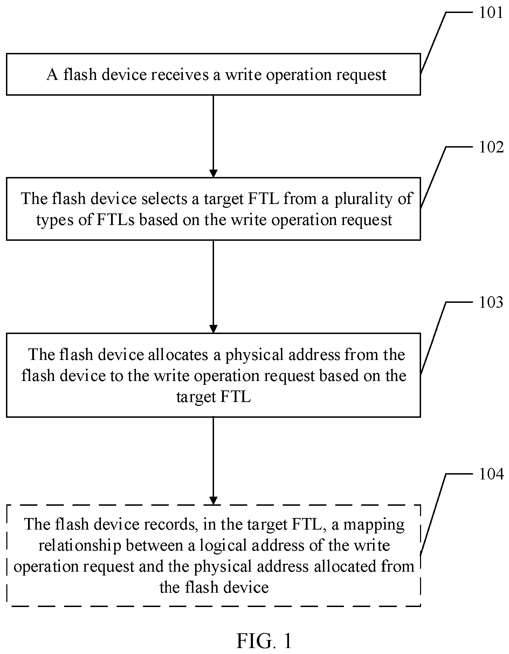

FIG. 1 is a schematic diagram of an embodiment of a data storage method in a flash device according to an embodiment of this application.

As shown in FIG. 1, the data storage method in the flash device in this embodiment of this application includes the following steps.

101: A flash device receives a write operation request.

The flash device receives the write operation request. The write operation request may be generated and sent by an operating system based on an access request of a user after the user initiates the access request.

The flash device described in this embodiment of this application includes a plurality of types of flash translation layers (flash translation layer, FTL), each of the plurality of types of FTLs is used to record a mapping from a logical address to a flash physical address, and granularities of logical addresses of the plurality of types of FTLs are different. The plurality of types of FTLs are located in a memory. It should be understood that a granularity of a logical address of an FTL is a size of a logical block in the FTL.

For example, if the granularity of the logical address of the FTL is 4 KB, a size of a logical block corresponding to one FTL mapping unit or FTL mapping entry is 4 KB, and one FTL mapping entry occupies 32-bit (that is, 4 bytes) memory space in a memory. Correspondingly, the granularity of the logical address of the FTL may alternatively be 512 bytes, 8 KB, 16 KB, or the like. In this embodiment of this application, the granularity of the logical address of the FTL may be an integer multiple of a sector size (512 bytes).

For FTLs with logical addresses of different granularities, a larger granularity of a logical address of an FTL indicates a larger logical block, fewer FTL mapping entries, and smaller occupied memory space. A smaller granularity of a logical address of an FTL indicates a smaller logical block, more FTL mapping entries, and larger occupied memory space. For example, granularities of logical addresses of FTLs are respectively 4 KB and 8 KB. If written data is 16 KB, and the FTL with the logical address whose granularity is 4 KB is used, four FTL mapping entries are required for mapping. For example, one FTL mapping entry is 32 bits. In this case, memory space correspondingly occupied by the written data is 128 bits. If the FTL with the logical address whose granularity is 8 KB is used, only two FTL mapping entries are required for mapping. For example, one FTL mapping entry is 32 bits. In this case, memory space correspondingly occupied by the written data is 64 bits, thereby reducing memory overheads by half.

102: The flash device selects a target FTL from the plurality of types of FTLs based on the write operation request. The flash device selects the target FTL from the plurality of types of FTLs based on the received write operation request.

The selection of the target FTL includes: selecting the target FTL from the plurality of types of FTLs based on a service type for sending the write operation request. The service type comprises one of a video recording service, a log online service, and an online transaction service. In some implementations of this embodiment of this application, the foregoing selection of the target FTL may be based also on but is not limited to: selecting the target FTL from the plurality of types of FTLs based on at least one of an input/output I/O size of the write operation request, a data type carried in the write operation request, or modification frequency of data in a logical address corresponding to the write operation request.

Specifically, three types of FTLs are used as an example. A granularity of a logical address of a first FTL is 512 bytes. A granularity of a logical address of a second FTL is 4 KB. A granularity of a logical address of a third FTL is 8 KB. Target FTL selection manners may include but are not limited to the following several types:
(1) A first target FTL selection manner: The target FTL is selected based on the input/output I/O size of the write operation request.

The I/O size of the write operation request is separately compared with write data size ranges corresponding to the granularities of the logical addresses of the plurality of types of FTLs, where the write data size ranges corresponding to the granularities of the logical addresses of the FTLs are different. An FTL corresponding to a write data size range that the I/O size of the write operation request meets is used as the target FTL.

For example, a write data size range corresponding to the granularity of the logical address of the first FTL is less than or equal to 512 bytes. A write data size range corresponding to the granularity of the logical address of the second FTL is greater than 512 bytes and less than or equal to 4 KB. A write data size range corresponding to the granularity of the logical address of the third FTL is greater than 4 KB. It is easy to understand that when the I/O size of the write operation request is less than or equal to 512 bytes, the first FTL with the logical address whose granularity is 512 bytes is selected as the target FTL. When the I/O size of the write operation request is greater than 512 bytes and less than or equal to 4 KB, the second FTL with the logical address whose granularity is 4 KB is selected as the target FTL. When the I/O size of the write operation request is greater than 4 KB, the third FTL with the logical address whose granularity is 8 KB is selected as the target FTL.

(2) A second target FTL selection manner: The target FTL is selected based on the data type carried in the write operation request.

Data types are metadata and user data. It can be learned from experience that a modification unit corresponding to the metadata usually has a small granularity (for example, 512 bytes) and is frequently modified, whereas a modification unit corresponding to the user data usually has a comparatively large granularity (for example, 8 KB). If the data type is the metadata, the first FTL with the logical address whose granularity is 512 bytes is selected as the target FTL. If the data type is the user data, the third FTL with the logical address whose granularity is 8 KB is selected as the target FTL.

(3) A third target FTL selection manner: The target FTL is selected based on the service type for sending the write operation request.

Three service types are used: a video recording service, a log online service, and an online transaction service. Usually, the video recording service usually corresponds to large I/O, such as 1 MB. The log online service usually corresponds to small I/O, such as 512 bytes. The online transaction service usually corresponds to large I/O, such as 8 KB. For the video recording service and the online transaction service, the third FTL with the logical address whose granularity is 8 KB is selected as the target FTL. For the log online service, the first FTL with the logical address whose granularity is 512 bytes is selected as the target FTL.

(4) A fourth target FTL selection manner: The target FTL is selected based on the modification frequency of the data in the logical address corresponding to the write operation request.

Cold data and hot data are used as an example. The cold data refers to data whose corresponding data modification frequency is lower than a threshold, and a data activity degree of the cold data is comparatively low. The hot data refers to data whose corresponding data modification frequency is higher than the threshold, and a data activity degree of the hot data is comparatively high. For the cold data with a comparatively low data activity degree, the third FTL with the logical address whose granularity is 8 KB may be selected as the target FTL, or the second FTL with the logical address whose granularity is 4 KB may be selected as the target FTL. For the hot data with a comparatively high data activity degree, the first FTL with the logical address whose granularity is 512 bytes may be selected as the target FTL.

103: The flash device allocates a physical address from the flash device to the write operation request based on the target FTL.

The allocating a physical address from the flash device to the write operation request based on the target FTL may include but is not limited to: allocating the physical address from the flash device to the write operation request based on a granularity of a flash physical address mapped by the target FTL.

Specifically, if the target FTL is the first FTL with the logical address whose granularity is 512 bytes, the physical address is allocated to the write operation request by using a mapping relationship in which one FTL mapping entry corresponds to a 512-byte logical block. If the target FTL is the second FTL with the logical address whose granularity is 4 KB, the physical address is allocated to the write operation request by using a mapping relationship in which one FTL mapping entry corresponds to a 4-KB logical block. If the target FTL is the third FTL with the logical address whose granularity is 8 KB, the physical address is allocated to the write operation request by using a mapping relationship in which one FTL mapping entry corresponds to an 8-KB logical block.

The logical block may be a logical block address (logical block address, LBA), and the physical address may be a physical page address (physical page address, PPA). The LBA is a logical address or logical space in the flash device. The PPA is a physical address or physical space in the flash device. That the flash device allocates a physical address from the flash device to the write operation request based on the target FTL may be: The flash device allocates memory space to the write operation request based on a granularity of a logical address of the target FTL, and an LBA to which the memory space is mapped is converted to a PPA in the flash device.

Optionally, 104. The flash device records, in the target FTL, a mapping relationship between the logical address of the write operation request and the physical address allocated from the flash device.

After the physical address is allocated to the write operation request, the mapping relationship between the logical address of the write operation request and the physical address allocated from the flash device is recorded in the target FTL. Specifically, the flash device adds a new mapping entry to a mapping table corresponding to the target FTL, and the newly-added mapping entry is used to record a correspondence between an LBA and a PPA that are in the write operation request.

In this embodiment of this application, the plurality of types of flash translation layers FTLs are disposed in the flash device, each of the plurality of types of FTLs is used to record the mapping from a logical address to a flash physical address, and the granularities of the logical addresses of the plurality of types of FTLs are different. In addition, the target FTL is selected from the plurality of types of FTLs based on the received write operation request, and the physical address is allocated from the flash device to the received write operation request based on the selected target FTL. Therefore, the technical solution in this application may provide a plurality of types of FTLs with different granularities, and flexibly configure a granularity of a logical address, to reduce memory overheads and maximize capacity space of a flash device that may be supported by a memory.

Further, compared with an existing single FTL management granularity, in this embodiment of this application, a plurality of manners of accessing FTLs with logical addresses of different granularities may be provided simultaneously in a same flash device, such as a mapping area with a fine granularity (each FTL mapping entry corresponds to a logical address of 512-byte data), and a mapping area with a coarse granularity (each FTL mapping entry corresponds to a logical address of 8-KB data). Data is stored in the mapping area with a fine granularity, and corresponding content is directly modified during actual modification. A ratio between an actual write data volume and a user-required write data volume, that is, a write amplification factor (Write Amplification Factor, WAF) is quite small, and an actual response speed is quite high. In addition, wear on the flash device is as low as possible, thereby prolonging a service life of the flash device. The user data is stored in the mapping area with a coarse granularity, which reduces a quantity of FTL mapping entries and memory space, so that a flash device with a larger capacity may be mapped under a limited memory capacity.

To better implement the foregoing solutions in the embodiments of this application, the following further provides a related apparatus for implementing the foregoing solutions.

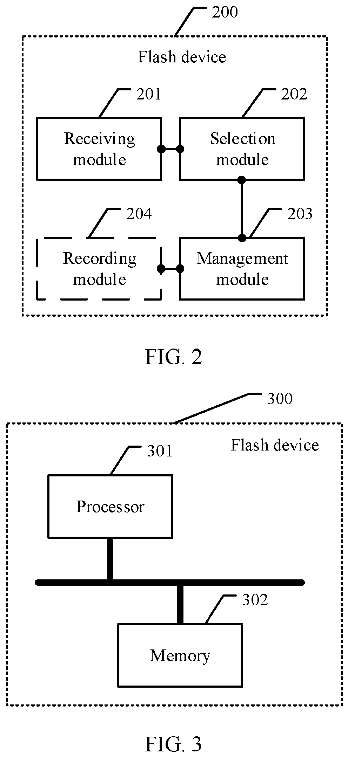

FIG. 2 is a schematic structural diagram of composition of a flash device according to an embodiment of this application.

A flash device 200 includes a receiving module 201, a selection module 202, and a management module 203. The flash device 200 includes a plurality of types of flash translation layers FTLs, each of the plurality of types of FTLs is used to record a mapping from a logical address to a flash physical address, and granularities of logical addresses of the plurality of types of FTLs are different. The receiving module 201 is configured to receive a write operation request. The selection module 202 is configured to select a target FTL from the plurality of types of FTLs based on the received write operation request. The management module 203 is configured to allocate a physical address from the flash device to the received write operation request based on the selected target FTL. The selection module 202 is configured to: select the target FTL from the plurality of types of FTLs based on at a service type for sending the write operation request.

In some implementations of this embodiment of this application, the selection module 202 is configured to: select the target FTL from the plurality of types of FTLs based also on at least one of an input/output I/O size of the write operation request, a data type carried in the write operation request, or modification frequency of data in a logical address corresponding to the write operation request.

In some implementations of this embodiment of this application, the selection module 202 is configured to: separately compare the I/O size of the write operation request with write data size ranges corresponding to the granularities of the logical addresses of the plurality of types of FTLs, where the write data size ranges corresponding to the granularities of the logical addresses of the FTLs are different. An FTL corresponding to a write data size range that the I/O size of the write operation request meets is used as the target FTL.

In some implementations of this embodiment of this application, the management module 203 is configured to allocate the physical address from the flash device to the write operation request based on a granularity of a flash physical address mapped by the target FTL.

In some implementations of this embodiment of this application, the flash device 200 further includes a recording module 204. The recording module 204 is configured to: after the physical address is allocated to the write operation request, record, in the target FTL, a mapping relationship between the logical address of the write operation request and the physical address allocated from the flash device.

It should be noted that all steps and operations performed by the flash device in the foregoing method embodiments may be performed by reference to each component module of the flash device 200. Beneficial effects achieved by the flash device 200 in this embodiment of this application are similar to those described in the foregoing method embodiments. For detailed descriptions of the beneficial effects, refer to descriptions of related parts in the foregoing method embodiments. Details are not described herein again.

It should be further noted that content such as information exchange between the modules/units of the apparatus and the execution processes thereof is based on a same idea as the method embodiments of this application, and produces same technical effects as the method embodiments of this application. For the specific content, refer to the foregoing description in the method embodiments of this application. Details are not described herein again.

An embodiment of this application further provides a computer storage medium. The computer storage medium stores a program, and the program performs some or all of the steps described in the foregoing method embodiments.

The following describes a flash device with another structure provided in this embodiment of this application.

FIG. 3 is another schematic structural diagram of composition of a flash device according to an embodiment of this application.

As shown in FIG. 3, a flash device 300 includes a processor 301 and a memory 302. There may be one or more processors 301. One processor is used as an example in FIG. 3.

The memory 302 may include a read-only memory and a random access memory, and provide instructions and data to the processor 301. A part of the memory 302 may further include a non-volatile random access memory (non-volatile random access memory, NVRAM). The memory 302 stores an operation instruction, an executable module or a data structure, or a subset thereof, or an extended set thereof.

The processor 301 controls an operation of the flash device, and the processor 301 may also be referred to as a central processing unit (central processing unit, CPU). In specific application, components of the flash device are coupled together through a bus system. In addition to a data bus, the bus system may include a power bus, a control bus, a status signal bus, and the like. However, for clear description, various types of buses in the figure are marked as the bus system.

The method disclosed in the embodiments of this application may be applied to the processor 301, or implemented by the processor 301. The processor 301 may be an integrated circuit chip and has a signal processing capability. In an implementation process, steps in the foregoing method may be implemented by using a hardware integrated logic circuit in the processor 301, or by using instructions in a form of software. The processor 301 may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor 301 may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly performed and accomplished by a hardware decoding processor, or may be performed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 302, and the processor 301 reads information in the memory 302 and completes the steps in the foregoing methods in combination with hardware of the processor.

In another possible design, a chip includes a processing unit and a communications unit. The processing unit may be, for example, a processor, and the communications unit may be, for example, an input/output interface, a pin, or a circuit. The processing unit may execute a computer-executable instruction stored in a storage unit, so that a chip in the terminal performs the data storage method according to any one implementation of the first aspect. Optionally, the storage unit is a storage unit in the chip, for example, a register or a cache. Alternatively, the storage unit may be a storage unit that is in the terminal and that is located outside the chip, for example, a read-only memory (read-only memory, ROM) or another type of static storage device that may store static information and instructions, such as a random access memory (random access memory, RAM).

Any one of the foregoing processors may be a general purpose central processing unit, a microprocessor, an ASIC, an FPGA, a CPLD, or one or more integrated circuits configured to control program execution of the method in the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of the embodiments. In addition, in the accompanying drawings of the apparatus embodiments provided in this application, connection relationships between modules indicate that the modules have communication connections with each other, which may be implemented as one or more communications buses or signal cables.

Based on the description of the foregoing implementations, a person skilled in the art may clearly understand that this application may be implemented by software in addition to necessary commodity hardware, or by dedicated hardware, including an application-specific integrated circuit, a dedicated CPU, a dedicated memory, a dedicated component, and the like. Usually, any function that is performed by a computer program may be easily implemented by using corresponding hardware. In addition, a specific hardware structure used to achieve a same function may be of various forms, for example, in a form of an analog circuit, a digital circuit, or a private circuit. However, for this application, software program implementation is better in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or a compact disc of a computer, and includes a plurality of instructions for instructing a computer device (which may be a personal computer, a server, or a network device) to perform the method described in the embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

## Claims

1. A data storage method in a flash device, wherein the flash device comprises a plurality of types of flash translation layers, FTLs, each of the plurality of types of FTLs is used to record a mapping from a logical address to a flash physical address, granularities of logical addresses of the plurality of types of FTLs are different, and the method comprises:
receiving (101) a write operation request;
selecting (102) a target FTL from the plurality of types of FTLs based on the write operation request; and
allocating (103) a physical address from the flash device to the write operation request based on the target FTL;
**characterised in that**
the selecting a target FTL from the plurality of types of FTLs based on the write operation request comprises:
selecting the target FTL from the plurality of types of FTLs based on a service type for sending the write operation request, wherein the service type is indicated by the write operation request and comprises one of a video recording service, a log online service, and an online transaction service.

2. The method according to claim 1, wherein the selecting a target FTL from the plurality of types of FTLs based on the write operation request further comprises:
selecting the target FTL from the plurality of types of FTLs based also on at least one of an input/output I/O size of the write operation request, a data type carried in the write operation request, or modification frequency of data in the logical address corresponding to the write operation request.

3. The method according to claim 2, wherein the selecting the target FTL from the plurality of types of FTLs based on an input/output I/O size of the write operation request comprises:
determining an FTL that is in the plurality of types of FTLs as the target FTL, wherein the I/O size of the write operation request is within a write data size range corresponding to the granularity of the logical address of the FTL, and write data size ranges corresponding to the granularities of the logical addresses of the FTLs are different.

4. The method according to any one of claims 1 to 3, wherein the allocating a physical address from the flash device to the write operation request based on the target FTL comprises:
allocating the physical address from the flash device to the write operation request based on a granularity of the flash physical address mapped by the target FTL.

5. The method according to any one of claims 1 to 4, wherein the method further comprises:
recording (104), in the target FTL, a mapping relationship between the logical address of the write operation request and the physical address allocated from the flash device.

6. A flash device (200), wherein the flash device comprises a plurality of types of flash translation layers, FTLs, each of the plurality of types of FTLs is used to record a mapping from a logical address to a flash physical address, granularities of logical addresses of the plurality of types of FTLs are different, and the flash device comprises:
a receiving module (201), configured to receive a write operation request;
a selection module (202), configured to select a target FTL from the plurality of types of FTLs based on the write operation request; and
a management module (203), configured to allocate a physical address from the flash device to the write operation request based on the target FTL;
**characterised in that** the selection module is configured to:
select the target FTL from the plurality of types of FTLs based on a service type for sending the write operation request, wherein the service type comprises one of a video recording service, a log online service, and an online transaction service.

7. The flash device according to claim 6, wherein the selection module is further configured to:
select the target FTL from the plurality of types of FTLs based also on at least one of an input/output I/O size of the write operation request, a data type carried in the write operation request, or modification frequency of data in the logical address corresponding to the write operation request.

8. The flash device according to claim 7, wherein the selection module is configured to:
determine an FTL that is in the plurality of types of FTLs as the target FTL, wherein the I/O size of the write operation request is within a write data size range corresponding to the granularity of the logical address of the FTL, and write data size ranges corresponding to the granularities of the logical addresses of the FTLs are different.

9. The flash device according to any one of claims 6 to 8, wherein the management module is configured to:
allocate the physical address from the flash device to the write operation request based on a granularity of the flash physical address mapped by the target FTL.

10. The flash device according to any one of claims 6 to 9, wherein the flash device further comprises a recording module (204); and
the recording module is configured to record, in the target FTL, a mapping relationship between the logical address of the write operation request and the physical address allocated from the flash device.

11. A flash device, wherein the flash device comprises a plurality of types of flash translation layers FTLs, each of the plurality of types of FTLs is used to record a mapping from a logical address to a flash physical address, and granularities of logical addresses of the plurality of types of FTLs are different; the flash device comprises a processor (301) and a storage medium (302), and the processor communicates with the storage medium; the storage medium is configured to store an operation instruction; and the processor is configured to invoke the operation instruction to perform the method according to any one of claims 1 to 5.

## Patentansprüche

1. Datenspeicherverfahren in einer Flash-Vorrichtung, wobei die Flash-Vorrichtung eine Vielzahl von Typen von Flash-Übersetzungsschichten, FTLs, umfasst, jeder der Vielzahl von Typen von FTLs dazu verwendet wird, eine Zuordnung von einer logischen Adresse zu einer physischen Flash-Adresse aufzuzeichnen, sich Granularitäten logischer Adressen der Vielzahl von Typen von FTLs unterscheiden und das Verfahren Folgendes umfasst:
Empfangen (101) einer Schreibvorgangsanforderung;
Auswählen (102) einer Ziel-FTL aus der Vielzahl von Typen von FTLs basierend auf der Schreibvorgangsanforderung; und
Zuweisen (103) einer physischen Adresse von der Flash-Vorrichtung an die Schreibvorgangsanforderung basierend auf der Ziel-FTL;
**dadurch gekennzeichnet, dass**
das Auswählen einer Ziel-FTL aus der Vielzahl von Typen von FTLs basierend auf der Schreibvorgangsanforderung Folgendes umfasst:
Auswählen der Ziel-FTL aus der Vielzahl von Typen von FTLs basierend auf einem Diensttyp zum Senden der Schreibvorgangsanforderung, wobei der Diensttyp durch die Schreibvorgangsanforderung angegeben wird und einen von einem Videoaufzeichnungsdienst, einem Online-Protokollierungsdienst und einem Online-Transaktionsdienst umfasst.

2. Verfahren nach Anspruch 1, wobei das Auswählen einer Ziel-FTL aus der Vielzahl von Typen von FTLs basierend auf der Schreibvorgangsanforderung ferner Folgendes umfasst:
Auswählen der Ziel-FTL aus der Vielzahl von Typen von FTLs zudem basierend auf mindestens einem von einer Eingangs-/Ausgangsgröße, E/A-Größe, der Schreibvorgangsanforderung, einem Datentyp, der in der Schreibvorgangsanforderung übertragen wird, oder einer Änderungshäufigkeit von Daten in der logischen Adresse, die der Schreibvorgangsanforderung entspricht.

3. Verfahren nach Anspruch 2, wobei das Auswählen der Ziel-FTL aus der Vielzahl von Typen von FTLs basierend auf einer Eingangs-/Ausgangsgröße, E/A-Größe, der Schreibvorgangsanforderung Folgendes umfasst:
Bestimmen einer FTL, die sich in der Vielzahl von Typen von FTLs befindet, als die Ziel-FTL, wobei die E/A-Größe der Schreibvorgangsanforderung innerhalb eines Schreibdatengrößenbereichs liegt, welcher der Granularität der logischen Adresse der FTL entspricht, und sich die Schreibdatengrößenbereiche, die den Granularitäten der logischen Adressen der FTLs entsprechen, unterscheiden.

4. Verfahren nach einem der Ansprüche 1 bis 3, wobei das Zuweisen einer physischen Adresse von der Flash-Vorrichtung an die Schreibvorgangsanforderung basierend auf der Ziel-FTL Folgendes umfasst:
Zuweisen der physischen Adresse von der Flash-Vorrichtung an die Schreibvorgangsanforderung basierend auf einer Granularität der physischen Flash-Adresse, die durch die Ziel-FTL zugeordnet ist.

5. Verfahren nach einem der Ansprüche 1 bis 4, wobei das Verfahren ferner Folgendes umfasst:
Aufzeichnen (104), in der Ziel-FTL, einer Zuordnungsbeziehung zwischen der logischen Adresse der Schreibvorgangsanforderung und der von der Flash-Vorrichtung zugewiesenen physischen Adresse.

6. Flash-Vorrichtung (200), wobei die Flash-Vorrichtung eine Vielzahl von Typen von Flash-Übersetzungsschichten, FTLs, umfasst, jeder der Vielzahl von Typen von FTLs dazu verwendet wird, eine Zuordnung von einer logischen Adresse zu einer physischen Flash-Adresse aufzuzeichnen, sich Granularitäten logischer Adressen der Vielzahl von Typen von FTLs unterscheiden und die Flash-Vorrichtung Folgendes umfasst:
ein Empfangsmodul (201), das dazu konfiguriert ist, eine Schreibvorgangsanforderung zu empfangen;
ein Auswahlmodul (202), das dazu konfiguriert ist, eine Ziel-FTL aus der Vielzahl von Typen von FTLs basierend auf der Schreibvorgangsanforderung auszuwählen; und
ein Verwaltungsmodul (203), das dazu konfiguriert ist, eine physische Adresse von der Flash-Vorrichtung an die Schreibvorgangsanforderung basierend auf der Ziel-FTL zuzuweisen;
**dadurch gekennzeichnet, dass** das Auswahlmodul konfiguriert ist zum:
Auswählen der Ziel-FTL aus der Vielzahl von Typen von FTLs basierend auf einem Diensttyp zum Senden der Schreibvorgangsanforderung, wobei der Diensttyp einen von einem Videoaufzeichnungsdienst, einem Online-Protokollierungsdienst und einem Online-Transaktionsdienst umfasst.

7. Flash-Vorrichtung nach Anspruch 6, wobei das Auswahlmodul ferner konfiguriert ist zum:
Auswählen der Ziel-FTL aus der Vielzahl von Typen von FTLs zudem basierend auf mindestens einem von einer Eingangs-/Ausgangsgröße, E/A-Größe, der Schreibvorgangsanforderung, einem Datentyp, der in der Schreibvorgangsanforderung übertragen wird, oder einer Änderungshäufigkeit von Daten in der logischen Adresse, die der Schreibvorgangsanforderung entspricht.

8. Flash-Vorrichtung nach Anspruch 7, wobei das Auswahlmodul konfiguriert ist zum:
Bestimmen einer FTL, die sich in der Vielzahl von Typen von FTLs befindet, als die Ziel-FTL, wobei die E/A-Größe der Schreibvorgangsanforderung innerhalb eines Schreibdatengrößenbereichs liegt, welcher der Granularität der logischen Adresse der FTL entspricht, und sich die Schreibdatengrößenbereiche, die den Granularitäten der logischen Adressen der FTLs entsprechen, unterscheiden.

9. Flash-Vorrichtung nach einem der Ansprüche 6 bis 8, wobei das Verwaltungsmodul konfiguriert ist zum:
Zuweisen der physischen Adresse von der Flash-Vorrichtung an die Schreibvorgangsanforderung basierend auf einer Granularität der physischen Flash-Adresse, die durch die Ziel-FTL zugeordnet ist.

10. Flash-Vorrichtung nach einem der Ansprüche 6 bis 9, wobei die Flash-Vorrichtung ferner ein Aufzeichnungsmodul (204) umfasst; und das Aufzeichnungsmodul dazu konfiguriert ist, in der Ziel-FTL eine Zuordnungsbeziehung zwischen der logischen Adresse der Schreibvorgangsanforderung und der von der Flash-Vorrichtung zugewiesenen physischen Adresse aufzuzeichnen.

11. Flash-Vorrichtung, wobei die Flash-Vorrichtung eine Vielzahl von Typen von Flash-Übersetzungsschichten FTLs umfasst, jeder der Vielzahl von Typen von FTLs dazu verwendet wird, um eine Zuordnung von einer logischen Adresse zu einer physischen Flash-Adresse aufzuzeichnen, und sich Granularitäten logischer Adressen der Vielzahl von Typen von FTLs unterscheiden; die Flash-Vorrichtung einen Prozessor (301) und ein Speichermedium (302) umfasst und der Prozessor mit dem Speichermedium kommuniziert; das Speichermedium dazu konfiguriert ist, eine Vorgangsanweisung zu speichern; und der Prozessor dazu konfiguriert ist, die Vorgangsanweisung aufzurufen, um das Verfahren nach einem der Ansprüche 1 bis 5 durchzuführen.

## Revendications

1. Procédé de stockage de données dans un dispositif flash, dans lequel le dispositif flash comprend une pluralité de types de couches de traduction flash, FTL, chacune de la pluralité de types de FTL est utilisée pour enregistrer un mappage entre une adresse logique et une adresse physique flash, les granularités des adresses logiques de la pluralité de types de FTL sont différentes, et le procédé comprend :
la réception (101) d'une requête d'opération d'écriture ;
la sélection (102) d'une FTL cible parmi la pluralité de types de FTL sur la base de la requête d'opération d'écriture ; et
l'allocation (103) d'une adresse physique du dispositif flash à la requête d'opération d'écriture sur la base de la FTL cible ;
**caractérisé en ce que**
la sélection d'une FTL cible parmi la pluralité de types de FTL sur la base de la requête d'opération d'écriture comprend :
la sélection de la FTL cible parmi la pluralité de types de FTL sur la base d'un type de service pour l'envoi de la requête d'opération d'écriture, dans lequel le type de service est indiqué par la requête d'opération d'écriture et comprend l'un d'un service d'enregistrement vidéo, d'un service de journalisation en ligne et d'un service de transaction en ligne.

2. Procédé selon la revendication 1, dans lequel la sélection d'une FTL cible parmi la pluralité de types de FTL sur la base de la requête d'opération d'écriture comprend en outre :
la sélection de la FTL cible parmi la pluralité de types de FTL sur la base également d'au moins l'un des éléments suivants : la taille d'entrée/sortie, E/S, de la requête d'opération d'écriture, le type de données transportées dans la requête d'opération d'écriture ou la fréquence de modification des données dans l'adresse logique correspondant à la requête d'opération d'écriture.

3. Procédé selon la revendication 2, dans lequel la sélection de la FTL cible parmi la pluralité de types de FTL sur la base de la taille d'entrée/sortie E/S de la requête d'opération d'écriture comprend :
la détermination d'une FTL qui fait partie de la pluralité des types de FTL en tant que FTL cible, dans lequel la taille d'E/S de la requête d'opération d'écriture se situe dans une plage de taille de données d'écriture correspondant à la granularité de l'adresse logique de la FTL, et les plages de taille de données d'écriture correspondant aux granularités des adresses logiques des FTL sont différentes.

4. Procédé selon l'une quelconque des revendications 1 à 3, dans lequel l'allocation d'une adresse physique du dispositif flash à la requête d'opération d'écriture sur la base de la FTL cible comprend :
l'allocation de l'adresse physique du dispositif flash à la requête d'opération d'écriture sur la base de la granularité de l'adresse physique flash mappée par la FTL cible.

5. Procédé selon l'une quelconque des revendications 1 à 4, dans lequel le procédé comprend en outre :
l'enregistrement (104), dans la FTL cible, d'une relation de mappage entre l'adresse logique de la requête d'opération d'écriture et l'adresse physique allouée dans le dispositif flash.

6. Dispositif flash (200), dans lequel le dispositif flash comprend une pluralité de types de couches de traduction flash, FTL, chacune de la pluralité de types de FTL est utilisée pour enregistrer un mappage entre une adresse logique et une adresse physique flash, les granularités des adresses logiques de la pluralité de types de FTL sont différentes, et le dispositif flash comprend :
un module de réception (201), configuré pour recevoir une requête d'opération d'écriture ;
un module de sélection (202), configuré pour sélectionner une FTL cible parmi la pluralité de types de FTL sur la base de la requête d'opération d'écriture ; et
un module de gestion (203), configuré pour allouer une adresse physique du dispositif flash à la requête d'opération d'écriture sur la base de la FTL cible ;
**caractérisé en ce que** le module de sélection est configuré pour : sélectionner la FTL cible parmi la pluralité de types de FTL sur la base d'un type de service pour l'envoi de la requête d'opération d'écriture, dans lequel le type de service comprend l'un d'un service d'enregistrement vidéo, d'un service de journalisation en ligne et d'un service de transaction en ligne.

7. Dispositif flash selon la revendication 6, dans lequel le module de sélection est en outre configuré pour :
sélectionner la FTL cible parmi la pluralité de types de FTL sur la base également d'au moins l'un des éléments suivants : la taille d'entrée/sortie, E/S, de la requête d'opération d'écriture, le type de données transportées dans la requête d'opération d'écriture ou la fréquence de modification des données dans l'adresse logique correspondant à la requête d'opération d'écriture.

8. Dispositif flash selon la revendication 7, dans lequel le module de sélection est configuré pour :
déterminer une FTL qui fait partie de la pluralité des types de FTL en tant que FTL cible, dans lequel la taille d'E/S de la requête d'opération d'écriture se situe dans une plage de taille de données d'écriture correspondant à la granularité de l'adresse logique de la FTL, et les plages de taille de données d'écriture correspondant aux granularités des adresses logiques des FTL sont différentes.

9. Dispositif flash selon l'une quelconque des revendications 6 à 8, dans lequel le module de gestion est configuré pour :
allouer l'adresse physique du dispositif flash à la requête d'opération d'écriture sur la base de la granularité de l'adresse physique flash mappée par la FTL cible.

10. Dispositif flash selon l'une quelconque des revendications 6 à 9, dans lequel le dispositif flash comprend en outre un module d'enregistrement (204) ; et
le module d'enregistrement est configuré pour enregistrer, dans la FTL cible, une relation de mappage entre l'adresse logique de la requête d'opération d'écriture et l'adresse physique allouée dans le dispositif flash.

11. Dispositif flash, dans lequel le dispositif flash comprend une pluralité de types de couches de traduction flash, FTL, chacune de la pluralité de types de FTL est utilisée pour enregistrer un mappage entre une adresse logique et une adresse physique flash, et les granularités des adresses logiques de la pluralité de types de FTL sont différentes ; le dispositif flash comprend un processeur (301) et un support de stockage (302), le processeur communique avec le support de stockage ; le support de stockage est configuré pour stocker une instruction de fonctionnement ; et le processeur est configuré pour invoquer l'instruction de fonctionnement afin de réaliser le procédé selon l'une quelconque des revendications 1 à 5.
